**Europäisches Patentamt**

**European Patent Office**

**Office européen des brevets**

(19)

(11) Veröffentlichungsnummer : **0 168 868
B1**

(12) **EUROPÄISCHE PATENTSCHRIFT**

(45) Veröffentlichungstag der Patentschrift :
01.02.89

(51) Int. Cl.⁴ : **C 23 C 24/08**

(21) Anmeldenummer : **85201000.8**

(22) Anmeldetag : **12.06.85**

(54) Verfahren zum Aufbringen einer schutzoxydbildende Elemente enthaltenden Korrosionsschutzschicht auf den Grundkörper einer Gasturbinenschaufel und Korrosionsschutzschicht auf dem Grundkörper einer Gasturbinenschaufel.

(30) Priorität : 16.07.84 CH 3455/84

(43) Veröffentlichungstag der Anmeldung :
22.01.86 Patentblatt 86/04

(45) Bekanntmachung des Hinweises auf die Patenterteilung : 01.02.89 Patentblatt 89/05

(84) Benannte Vertragsstaaten :
CH DE GB LI

(56) Entgegenhaltungen :
DE—A— 2 115 358
DE—A— 2 613 588
FR—A— 2 430 286
US—A— 3 023 490
US—A— 3 024 128

(73) Patentinhaber : BBC Brown Boveri AG
Haselstrasse
CH-5401 Baden (CH)

(72) Erfinder : Nazmy, Mohamed Yousef, Dr.
Geelig 2
CH-5412 Gebenstorf (CH)
Erfinder : Singer, Robert, Dr.
Höhenweg 35c
CH-5417 Untersiggenthal (CH)

EP 0 168 868 B1

## Beschreibung

Die Erfindung geht aus von einem Verfahren zum Aufbringen einer schutzoxydbildende Elemente enthaltenden Korrosionsschutzschicht nach der Gattung des Oberbegriffs des Anspruchs 1.

Korrosionsschutzschichten, insbesondere Hochtemperatur-Korrosionsschutzschichten werden beim Bau von Gasturbinen zur Verlängerung der Lebensdauer und zur Erzielung besseren Betriebsverhaltens von hochbeanspruchten Teilen (Turbinenschaufeln) benötigt. Grundsätzlich handelt es sich darum, schutzoxydbildende Elemente (z. B. Cr, Al, Si) in die Oberflächenzone des Bauteils einzulagern oder als mehr oder weniger zusammenhängende Schicht — meist in eine Matrix eingebettet — auf die Oberfläche des Bauteils aufzubringen. Im Betrieb bilden sich sodann die Schutzoxyde in Form von zusammenhängenden Deckschichten aus. Es ist bekannt, dass $SiO_2$-bildende Deckschichten in mancher Hinsicht den $Cr_2O_3$- und $Al_2O_3$-bildenden Deckschichten überlegen sind. Sie zeigen eine höhere Korrosionsbeständigkeit und insbesondere bei hohen Temperaturen höhere Oxydationsbeständigkeit als die beiden anderen Varianten (Vergl. M. W. Grünling, R. Bauer, The role of silicon in corrosion-resistant high temperature coatings, Int. Conf. on Metallurgical Coatings and Process Technology, San Diego USA, April 5-8, 1982, Thin Solid Films, Vol. 95, No. 1 1983).

$SiO_2$-bildende Schichten wurden jedoch bis zu diesem Zeitpunkt trotzdem kaum eingesetzt, da die aufgebrachten hochsilizierten Schutzschichten und Randzonen ungünstige mechanische Eigenschaften aufweisen. Zufolge ihrer Sprödigkeit haften sie ungenügend auf dem Grundkörper, reissen auf oder blättern ab.

Es ist deshalb schon vorgeschlagen worden, Silizium in Form einer inerten Phase, z. B. als SiC zuzugeben (Vergl. V. Nagarajan, I. G. Wright, Investigation of techniques for preparation of high-temperature alloys capable of forming protective silica scales, Battelle Columbus Laboratories, Columbus, Ohio USA, EPRI Contract TPS 79-731, Final Report 1981).

Aus der DE-A-21 15 358 ist das Aufbringen von Füllstoffteilchen höherer Schmelztemperatur in einer Metallmatrix niedrigerer Schmelztemperatur bekannt, wobei Füllstoffwie Metallteilchen in einem organischen Bindemittel eingebettet und durch Verdichten zu je einer Folie verbunden werden. Beide Folien werden dann auf einen Träger aufgepresst oder geklebt und in einem Ofen wärmebehandelt. Zur Herabsetzung des Schmelzpunktes der Metallmatrix wird Bor zugegeben.

Die DE-A-26 13 588 beschreibt ein Verfahren zur Lebensdauerverlängerung von Leitungsrohren durch Aufbringen einer aus Karbiden, Boriden, Nitriden und Siliziden und einer Metallmatrix bestehenden Schutzschicht mittels Flammenspritzen oder Sprühen.

Die genannten Verfahren sind indessen nicht geeignet, festhaftende, nicht abblätternde, genügend duktile Korrosionsschutzschichten zu erzeugen.

Da zur Zeit keines der bekannten Verfahren zur Erzeugung von SiC-haltigen Oberflächenschichten — Kathodenstrahlzerstäubung, Vakuumverdampfung, Flamm- oder Plasmaspritzen etc. — als geeignet erscheint, besteht ein grosses Bedürfnis, einen diesbezüglich gangbaren und erfolgversprechenden Weg aufzuzeigen.

Der Erfindung liegt die Aufgabe zugrunde, ein Verfahren zum Auf- bzw. Einbringen von Siliziumkarbid in die Oberflächenzone einer aus einer Superlegierung als Grundkörper bestehenden Gasturbinenschaufel sowie eine einen hohen Siliziumgehalt aufweisende Korrosionsschutzschicht für Gasturbinenschaufeln anzugeben.

Diese Aufgabe wird durch die in den unabhängigen Ansprüchen 1 und 4 angegebenen Merkmale gelöst.

Die Erfindung wird anhand der nachfolgenden, durch Figuren näher erläuterten Ausführungsbeispiele beschrieben.

Dabei zeigt :

Fig. 1 einen Schnitt durch einen zu beschichtenden Grundkörper im Zeitpunkt des Aufbringens einer Pulverschicht,

Fig. 2 einen Schnitt durch einen beschichteten Grundkörper im Zeitpunkt des Aufschmelzens der aufgebrachten Pulverschicht.

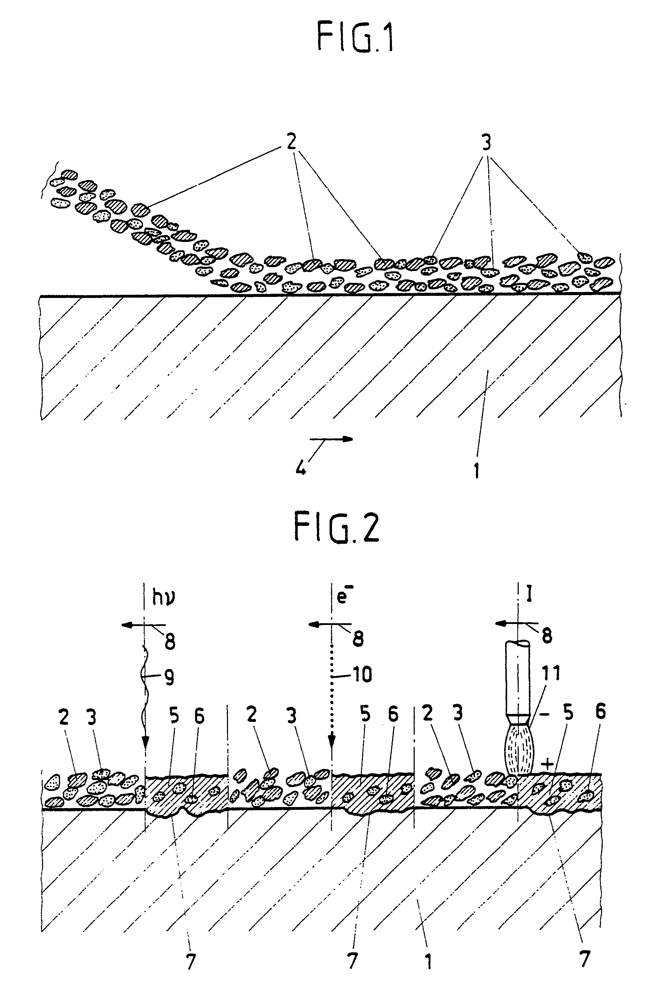

In Fig. 1 ist ein schematischer Schnitt durch einen zu beschichtenden Grundkörper im Zeitpunkt des Aufbringens einer Pulverschicht dargestellt. 1 stellt einen Grundkörper (Grundwerkstoff, Substrat) dar, welcher mit einer Korrosionsschutzschicht zu versehen ist. Im vorliegenden Fall handelt es sich um einen Ausschnitt aus einem Bauteil für eine thermische Maschine, z. B. aus einer Gasturbinenschaufel bestehend aus einer Nickelbasis-Superlegierung. Die aufzubringende Pulvermischung ist schematisch als Gemenge der Partikel 2 aus einer Superlegierung und der Partikel 3 aus Siliziumkarbid dargestellt. Die Vorschubrichtung des Grundkörpers 1 beim Aufbringen der Pulvermischung ist durch den Pfeil 4 angedeutet.

Das aufzubringende Material ist hier als lose Pulvermischung dargestellt. Doch gilt Fig. 1 grundsätzlich auch für alle anderen derartigen Aufbringverfahren : Einfüllen von Pulver in einen Zwischenraum zwischen Grundkörper 1 und Gesenk oder Kapsel etc.

Fig. 2 stellt den schematischen Schnitt durch einen beschichteten Grundkörper im Zeitpunkt des Aufschmelzens der aufgebrachten Pulverschicht dar. Die Bezugszeichen 1 bis 3 entsprechen genau denjenigen der Fig. 1. Daraus geht der Zustand der locker aufgestreuten Pulverpartikel hervor. 5 stellt jeweils die aufgeschmolzene und wieder erstarrte Masse des Superlegierungspulvers dar. Dieser, die Matrix der Korrosionsschutzschicht bildende Teil ist des weiteren fest mit dem Grundkörper 1 durch einen entsprechenden Aufschmelz- und Erstarrungsvorgang verbunden. Die entsprechende Verbindungszone 7 Korrosionsschutzschicht/Grundkörper ist durch eine unregelmässige Linie angedeutet. 6 stellen die in der Masse 5 eingebetteten, zum Teil aufgeschmolzenen bzw. chemisch umgewandelten Siliziumkarbid-Partikel und ihre Umwandlungsprodukte (Komplexe, mehrfache Karbide und Mischkarbide) dar. In der Figur sind 3 verschiedene Aufschmelzverfahren und ihre entsprechenden Mittel dargestellt. 9 bezieht sich auf einen Laserstrahl (gewellte Linie h$\nu$), 10 auf einen Elektronenstrahl (punktierte Linie e$^-$) und 11 auf einen Lichtbogen (Stromzuführungselektrode-, Strom I). Die jeweilige Vorschubrichtung des verwendeten Mittels beim Aufschmelzen der Pulvermischung ist durch Pfeile 8 angedeutet.

Ausführungsbeispiel 1 :

Auf eine Gasturbinenschaufel aus einer Nickelbasis-Superlegierung der Markenbezeichnung MA 6000 (Inco) wurde eine Korrosionsschutzschicht aufgebracht. Die Superlegierung hatte folgende Zusammensetzung :

| | | |
|---|---:|---|
| Ni | 69 | Gew.-% |
| Cr | 15 | Gew.-% |
| W | 4,0 | Gew.-% |
| Mo | 2,0 | Gew.-% |
| Al | 4,5 | Gew.-% |
| Ti | 2,5 | Gew.-% |
| Ta | 2,0 | Gew.-% |
| C | 0,05 | Gew.-% |
| B | 0,01 | Gew.-% |
| Zr | 0,15 | Gew.-% |
| $Y_2O_3$ | 1,1 | Gew.-% |

Legierungspulver der gleichen vorstehenden Zusammensetzung wurde im Volumenverhältnis 1 : 1 mit Siliziumkarbidpulver gemischt : SiC-Gehalt der Pulvermischung ca. 28 Gew.-% ; C-Gehalt ca. 8,4 Gew.-% ; Si-Gehalt ca. 19,6 Gew.-%. Die Pulvermischung hatte eine mittlere Korngrösse von ca. 60 µm (grösstes Korn ca. 100 µm). Die Gasturbinenschaufel wurde nun derart in das Gesenk einer Schmiedepresse eingelegt, dass allseitig ein Hohlraum von ca. 2 bis 3 mm vorhanden war, welcher von der Pulvermischung ausgefüllt wurde. Die Schaufel war also allseitig im Pulver eingebettet. Nun wurde das Ganze während 5 s bei einer Temperatur von 900 °C und einem Druck von 500 MPa isotherm heissgepresst. Dabei verschweissten die Partikel des Legierungspulvers sowohl untereinander wie mit der Masse der Superlegierung der Schaufel zu einem festen, dichten, kompakten Körper, in dessen Randzone die SiC-Partikel eingelagert waren. Letztere hatten teilweise mit dem Superlegierungsmaterial reagiert, so dass ein Austausch der beteiligten Elemente (chemische Umwandlung) stattfand. Durch Analyse wurde ermittelt, dass die Korrosionsschutzschicht, welche eine durchschnittliche Dicke von ca. 1 mm aufwies, im wesentlichen aus einer hochnickelhaltigen Matrix bestand, in welche ein Teil des Siliziums eingewandert war. In dieser Matrix waren verschiedene Partikel von komplexen Phasen eingebettet. Unter anderem wurden Mischkarbide des W, Mo, Cr, Ta und Ti nebst solchen mit unverändertem SiC festgestellt. Sowohl die siliziumhaltige Matrix wie die noch Silizium enthaltenden Karbide dienen im Betrieb als Reserve (Speicher) für die Bildung der $SiO_2$-haltigen Deckschicht.

Ausführungsbeispiel 2 :

Eine zuvor auf längliches Grobkorn geglühte Gasturbinenschaufel aus der Legierung MA 6000 gemäss Zusammensetzung von Beispiel 1 wurde mit einer Korrosionsschutzschicht versehen. Zunächst wurde Legierungspulver der gleichen Zusammensetzung wie der Grundkörper 1 (Fig. 1) im Volumenverhältnis 1 : 1 mit Siliziumkarbidpulver gemischt : SiC-Gehalt der Pulvermischung ca. 28 Gew.-% ; C-Gehalt ca. 8,4 Gew.-% ; Si-Gehalt ca. 19,6 Gew.-%. Die mittlere Korngrösse der Pulvermischung betrug 20 µm (grösstes Korn. ca. 40 µm). Aus Weicheisenblech von 1 mm Dicke wurde eine Kapsel geformt, deren Hohlmasse (Innenabmessungen) diejenigen der Gasturbinenschaufel um ca. 4-5 mm übertrafen : Einseitiger Abstand der Kapselinnenwand von der Schaufeloberfläche ca. 2-2,5 mm. Dieser Hohlraum wurde mit der Pulvermischung gefüllt und die Kapsel daraufhin gasdicht verschweisst. Nun wurde das Ganze einem heissisostatischen Pressvorgang unter einem Druck von 150 MPa bei einer Temperatur von 1 200 °C während 1/2 h ausgesetzt. Nach dem Pressen wurde die Weicheisenschicht durch mechanische Bearbeitung entfernt. Es hatte sich darunter eine mit dem Grundkörper 1 fest verschweisste Korrosionsschutzschicht von ca. 1-1,2 mm Dicke gebildet, in deren Matrix aus Superlegierung diskrete Partikel von Karbiden eingelagert waren, welche als Speicher für die Oxyd-Deckschicht dienen.

Ausführungsbeispiel 3 :

Siehe Figuren 1 und 2 :
Auf eine Gasturbinenschaufel der gleichen Legierung MA 6000 wie in Beispiel 1 wurde eine Korrosionsschutzschicht aufgebracht. Legierungspulver (Partikel 2) der gleichen Zusammensetzung wie der Grundkörper 1 wurde im Volumenverhältnis 1 : 2 mit Siliziumkarbidpulver (Partikel 3) gemischt : SiC-Gehalt der Pulvermischung ca. 44 Gew.-% ; C-Gehalt ca. 13,2 Gew.-% ; Si-Gehalt ca. 30,8 Gew.-%. Die Pulvermischung hatte eine mittlere Korngrösse von 25 µm (grösstes Korn ca. 40 µm) und wurde in einer Schichtdicke von ca. 2 mm auf die Gasturbinenschaufel aufgebracht. Nun wurden die Partikel 2 aus der Superlegierung der aufgetragenen Schicht mittels Laserstrahl 9 von 5 kW Leistung aufgeschmolzen und mit dem Grundkörper 1 in der Verbindungszone 7 als wieder erstarrte Masse 5 fest verankert. Die darin eingebetteten, teilweise umgewandelten Partikel 6 zeigten neben SiC einen gewissen Anteil von komplexen Mischkarbiden. Ein Teil des freigesetzten elementaren Siliziums war in der Matrix der Masse 5 gelöst. Die fertige Korrosionsschutzschicht wies eine Dicke von ca. 0,8 mm auf.

Ausführungsbeispiel 4 :

Eine Gasturbinenschaufel wurde in der gleichen Weise beschichtet wie in Beispiel 3 angegeben. Das Aufschmelzen und Einschmelzen des Legierungspulvers in den Grundkörper 1 erfolgte jedoch mittels eines Elektronenstrahls 10. Das Ergebnis war eine zusammenhängende, fest mit dem Grundkörper 1 verankerte Korrosionsschutzschicht analogen Gefüges und ähnlicher Zusammensetzung wie in Beispiel 2.

Ausführungsbeispiel 5 :

Als Grundkörper 1 wurde eine Gasturbinenschaufel aus der Legierung MA 6000 gemäss Beispiel 1 verwendet. Die Schaufel wurde zunächst in 10 %iger Natronlauge bei 40 °C entfettet und dann in 20 %iger Schwefelsäure bei Raumtemperatur anodisch gebeizt. Zu diesem Zweck wurde das Werkstück mit dem positiven Pol einer Gleichstromquelle verbunden und in ein Beizbad eingehängt. Nach einer Spülung mit Wasser wurde das Werkstück elektrochemisch mit einer Chromschicht von ca. 0,15 mm Dicke versehen. Nach einer weiteren Spülung wurde das verchromte Werkstück in ein zweites Elektrolysebad gebracht, welches ausser gelösten Nickel- und Borsalzen noch ca. 150 g Siliziumkarbid pro l Flüssigkeit in Suspension enthielt. Die Siliziumkarbidpartikel hatten eine Korngrösse von 4 bis 12 $\mu$m und wurden durch intensive Badbewegung in Schwebe gehalten. Durch einen kombinierten elektrolytisch-elektrophoretischen Prozess wurde dadurch gleichzeitig Nickel (als zusammenhängende Matrix) und Siliziumkarbid (als eingebettete Partikel) auf der Oberfläche des verchromten Grundkörpers 1 in einer Dicke von ca. 0,85 mm abgeschieden. Dabei übernahmen Nickel und Chrom zusammengenommen gleichsam die Funktion der Pulverpartikel 2 und das Siliziumkarbid diejenige der Pulverpartikel 3 in Fig. 1. Die gesamte aufgetragene Oberflächenschicht hatte eine Dicke von ca. 1 mm und wies annähernd die theoretische Dichte auf. In einem darauffolgenden Aufschmelz- und Einschmelzprozess wurde die Schicht mittels Lichtbogen 11 gemäss Fig. 2 wärmebehandelt, wobei eine dem Grundkörper 1 ähnliche Masse 5 als Matrix (Cr/Ni-Legierung) mit eingebetteten Partikeln 6 als zusätzlichem Silizium-Speicher gebildet wurde. Auch hier konnten in der fertigen Korrosionsschutzschicht neben Silizium in der Grundmasse die Karbide des Siliziums, Chroms und in geringerem Gehalt diejenigen des Wolframs, Molybdäns und Tantals sowie entsprechende Mischkarbide festgestellt werden.

Selbstverständlich können die angegebenen Verfahrensschritte mehrmals wiederholt und in der Reihenfolge auch umgekehrt werden. Auch kann die Beimengung des Siliziumkarbidpulvers ebenfalls im Chromelektrolysebad erfolgen. Es können dem Nickelelektrolysebad statt Siliziumkarbid allein auch zusätzlich Silizide, z. B. Chromsilizid $Cr_3Si$ als Suspension beigegeben werden. Auf diese Weise lassen sich Oberflächenschichten beliebiger Dicke und Zusammensetzung verwirklichen. Durch den nachfolgenden Auf- und Einschmelzprozess kann die Struktur und Zusammensetzung der Matrix der Oberflächenschicht weitgehend optimiert und der Legierung des Grundkörpers 1 angepasst werden.

Unter gewissen Umständen, insbesondere bei geringeren Anforderungen, geringeren Dicken der Schutzschicht und kleineren Abmessungen des Werkstücks kann auf den ersten Schritt der Verchromung des Grundkörpers 1 verzichtet und mit einem Nickelelektrolysebad allein, mit oder ohne Zusätze von suspendierten chromhaltigen Partikeln (Cr, $Cr_3Si$ etc.) gearbeitet werden.

Die Erfindung ist nicht auf die Ausführungsbeispiele beschränkt. Als Aufbringverfahren kann irgend ein Verfahren dienen, welches die gleichzeitige Ablagerung einer metallischen Grundmasse — in Schicht- oder Partikelform — und diskreter SiC-Partikel gewährleistet. Wird hierzu eine Pulvermischung verwendet, so kann die Partikelgrösse vorteilhafterweise 10 bis 100 $\mu$m betragen. Im Falle des elektrolytisch/elektrophoretischen Aufbringens können mehrere Bäder hintereinander angewendet werden. Der Verdichtungs/ Kompaktierungs/Verschweissungs-Schritt kann durch Aufschmelzen (eine Art lokale Schmelzschweissung) des metallischen Anteils mittels Laserstrahl, Elektronenstrahl oder Lichtbogen oder durch Heisspressen (eine Art Press-Schweissung, Sintern, Drucksintern, Diffusions-Verbinden etc.) erfolgen.

Das Heisspressen kann vorteilhafterweise bei einer Temperatur von 900 °C und einem Druck von bis 500 MPa während einer Zeitdauer von 0,5 bis 10 s entsprechend einem Verformungsgrad von ca. 0,2 und einer Verformungsgeschwindigkeit von $0,2 \cdot 10^{-1}s^{-1}$ bis $4 \cdot 10^{-1}s^{-1}$ durchgeführt werden. Im Falle der Anwendung des heissisostatischen Pressens zur Herstellung der Korrosionsschutzschicht ist es vorteilhaft, von einem zunächst auf Grobkorn geglühten Grundkörper 1 der Gasturbinenschaufel auszugehen und das nachfolgende heiss-isostatische Pressen bei einer Temperatur von 1 200 °C unter einem Druck von 100-150 MPa während einer Zeitdauer von 1/2 bis 3 h durchzuführen. Steht der Grundkörper 1 dagegen lediglich als feinkörniges Vormaterial zur Verfügung, so darf — um eine Rekristallisation in unerwünschter Richtung zu vermeiden — höchstens bei 900 °C gepresst werden, was dann Drücke von 500 MPa und Zeiten bis zu 5 h erfordern würde.

Die Zusammensetzung der metallischen Matrix der Korrosionsschutzschicht kann annähernd die gleiche wie diejenige des Grundkörpers 1 der Gasturbinenschaufel sein. Sie kann ferner aus Nickel, einer Nickel/Chrom-Legierung oder aus Kobalt bestehen. Dieser letztere Fall liegt meist dann vor, wenn der die Matrix bildende Werkstoff elektrochemisch (galvanisch) auf den Grundkörper 1 aufgebracht wird.

Der Vorteil der neuen Korrosionsschutzschicht besteht darin, dass sie trotz hohen Si-Gehaltes nicht die übliche Sprödigkeit besitzt und im Betrieb nicht vom Grundkörper 1 abblättert. Ausserdem wird eine schnelle Diffusion von Silizium in den Grundkörper 1 verhindert. Das Silizium wandert langsam aus den diskret eingebetteten SiC-Partikeln in die Matrix ein und bildet an der Oberfläche laufend SiO$_2$-haltige Deckschichten. Da sich diese Nachlieferung über einen längeren Zeitabschnitt erstreckt kann mit einer hohen Lebensdauer und Wirksamkeit der Korrosionsschutzschicht gerechnet werden.

**Patentansprüche**

1. Verfahren zum Aufbringen einer schutzoxydbildende Elemente enthaltenden Korrosionsschutzschicht auf den Grundkörper (1) einer Gasturbinenschaufel, wobei das schutzoxydbildende Element in Form von Partikeln (3) zusammen mit einem eine metallische Matrix der Schutzschicht bildenden Werkstoff ausgewählt aus Nickel, Kobalt oder einer Nickel/Chromlegierung in Form von Partikeln (2) oder Schichten auf den aus einer Superlegierung bestehenden Grundkörper (1) der Gasturbinenschaufel aufgebracht wird, wobei das schutzoxydbildende Element Silizium ist und die metallische Matrix eine ähnliche oder annähernd die gleiche Zusammensetzung wie der Grundkörper (1) der Gasturbinenschaufel aufweist, wobei ferner das Silizium in Form von SiC-Partikeln elektrophoretisch und der die metallische Matrix der Schutzschicht bildende Werkstoff abwechslungsweise oder gleichzeitig elektrolytisch in Schichtform auf den Grundkörper (1) der Gasturbinenschaufel abgeschieden werden, und wobei der die metallische Matrix bildende Werkstoff oberflächlich aufgeschmolzen wird, derart, dass die Matrix der Schutzschicht mit dem Grundkörper (1) fest verbunden wird und dass das Silizium mindestens teilweise als SiC in Form feiner, als Speicher wirkender Partikel (6) in der Matrix eingebettet wird.

2. Verfahren nach Anspruch 1, dadurch gekennzeichnet, dass mindestens einzelne Komponenten des die metallische Matrix der Schutzschicht bildenden Werkstoffs elektrolytisch nacheinander und abwechslungsweise oder gleichzeitig mit der elektrophoretischen Abscheidung des SiC in einer Folge von Schichten auf den Grundkörper (1) der Gasturbinenschaufel abgeschieden werden.

3. Verfahren nach Anspruch 1, dadurch gekennzeichnet, dass das oberflächliche Aufschmelzen des die Matrix bildenden Werkstoffs durch einen Laserstrahl (9) oder einen Elektronenstrahl (10) oder einen elektrischen Lichtbogen (11) erfolgt.

4. Verfahren zum Aufbringen einer schutzoxydbildende Elemente enthaltenden Korrosionsschutzschicht auf den Grundkörper (1) einer Gasturbinenschaufel, wobei das schutzoxydbildende Element in Form von Partikeln (3) zusammen mit einem eine metallische Matrix der Schutzschicht bildenden Werkstoff ausgewählt aus Nickel, Kobalt oder einer Nickel/Chromlegierung in Form von Partikeln (2) oder Schichten auf den aus einer Superlegierung bestehenden Grundkörper (1) der Gasturbinenschaufel aufgebracht wird, wobei das schutzoxydbildende Element Silizium ist und die metallische Matrix eine ähnliche oder annähernd die gleiche Zusammensetzung wie der Grundkörper (1) der Gasturbinenschaufel aufweist, wobei das Silizium in Form von SiC-Partikeln dem die metallische Matrix bildenden, ebenfalls in Partikelform vorliegenden Werkstoff beigemischt und die auf diese Weise erzeugte bindemittelfreie Pulvermischung auf den Grundkörper (1) der Gasturbinenschaufel aufgebracht und hierauf oberflächlich verdichtet, gepresst und verschweisst wird, derart, dass die Matrix der Schutzschicht mit dem Grundkörper (1) fest verbunden wird und dass das Silizium mindestens teilweise als SiC in Form feiner, als Speicher wirkender Partikel (6) in der Matrix eingebettet wird.

5. Verfahren nach Anspruch 4, dadurch gekennzeichnet, dass das oberflächliche Verdichten, Pressen und Verschweissen des die Matrix bildenden Werkstoffs durch Heisspressen bei einer Temperatur von 900 °C und einem Druck von bis 500 MPa während 0,5 bis 10 s erfolgt.

6. Verfahren nach Anspruch 4, dadurch gekennzeichnet, dass das oberflächliche Verdichten, Pressen und Verschweissen des die Matrix bildenden Werkstoffs durch heiss-isostatisches Pressen einer in einen allseitig abgeschlossenen Weicheisenblechkörper eingefüllten Pulvermischung bei einer Temperatur von 1 200 °C und einem Druck von 100-150 MPa während 1/2-3 h erfolgt, und dass der Weicheisenblechkörper nach deren heiss-isostatischem Pressen mechanisch oder chemisch entfernt wird.

7. Verfahren nach Anspruch 4, dadurch gekennzeichnet, dass der Grundkörper (1) der Gasturbinenschaufel vor seiner Beschichtung mit einer Korrosionsschutzschicht einer Grobkornglühung unterworfen wird.

**Claims**

1. Process for applying a corrosion-protection coating containing elements which form a protective oxide onto the body (1) of a gas turbine blade, the element which forms the protective oxide being applied in the form of particles (3) together with a material which forms a metallic matrix of the protective coating and is selected from nickel, cobalt or a nickel/chromium alloy in the form of particles (2) or coatings onto the body (1), comprising a superalloy, of the gas turbine blade, where the element forming the protective oxide is silicon and the metallic matrix has a similar or approximately the same composition as the body (1) of the gas turbine blade, and where, furthermore, the silicon is deposited electrophoretically in the form of SiC particles and the material forming the metallic matrix of the protective coating is deposited electrolytically in coating form, alternately or simultaneously, onto the body (1) of the gas turbine blade, and where the material forming the metallic matrix is molten at the surface in a manner such that the matrix of the protective coating is bonded firmly to the body (1) and such that the silicon is embedded in the matrix, at least partly as SiC, in the form of fine particles (6) acting as a store.

2. Process according to Claim 1, characterized in that at least some of the components of the material forming the metallic matrix of the protective coating are deposited electrolytically one after the other and alternately or simultaneously with the electrophoretic deposition of the SiC in a sequence of coatings on the body (1) of the gas turbine blade.

3. Process according to Claim 1, characterized in that the melting at the surface of the material forming the matrix is carried out by a laser beam (9) or an electron beam (10) or an electrical arc (11).

4. Process for applying a corrosion-protection coating containing elements which form a protective oxide onto the body (1) of a gas turbine blade, the element which forms the protective oxide is applied in the form of particles (3) together with a material which forms a metallic matrix of the protective coating and is selected from nickel, cobalt or a nickel/chromium alloy in the form of particles (2) or coatings onto the body (1), comprising a superalloy, on the gas turbine blade, where the element forming the protective oxide is silicon and the metallic matrix has a similar or approximately the same composition as the body (1) of the gas turbine blade, where the silicon, in the form of SiC particles, is admixed with the material, likewise in particle form, forming the metallic matrix and the binder-free powder mixture produced in this way is applied to the body (1) of the gas turbine blade and compressed, pressed and welded at the surface on the latter in a manner such that the matrix of the protective coating is bonded firmly to the body (1) and such that the silicon is embedded in the matrix, at least partly as SiC, in the form of fine particles (6) acting as a store.

5. Process according to Claim 4, characterized in that the compression, pressing and welding at the surface of the material forming the matrix is carried out by hot pressing at a temperature of 900 °C and a pressure of up to 500 MPa for 0.5 to 10 seconds.

6. Process according to Claim 4, characterized in that the compression, pressing and welding at the surface of the material forming the matrix is carried out by hot isostatic pressing a powder mixture, introduced into a soft-iron sheeting element sealed at all sides, at a temperature of 1 200 °C and a pressure of 100-150 MPa for 1/2-3 hours, and in that the soft-iron sheeting element is removed mechanically or chemically·after hot isostatic pressing thereof.

7. Process according to Claim 4, characterized in that the body (1) of the gas turbine blade is subjected to coarse-grain annealing before it is coated with a corrosion-protection coating.

## Revendications

1. Procédé pour déposer une couche de protection contre la corrosion contenant des éléments formant des oxydes protecteurs sur la base (1) d'une aube de turbine à gaz, dans lequel l'élément formant des oxydes protecteurs est déposé sur la base (1) en superalliage de l'aube de turbine à gaz, sous la forme de particules (3) en même temps qu'un matériau formant une matrice métallique de la couche de protection, choisi parmi le nickel, le cobalt ou un alliage chrome/nickel sous la forme de particules (2) ou de couches, dans lequel l'élément formant des oxydes protecteurs est le silicium et dans lequel la matrice métallique présente une composition analogue ou à peu près identique à celle de la base (1) de l'aube de turbine à gaz, dans lequel en outre le silicium est déposé par voie électrophorétique sous la forme de particules de SiC et le matériau formant la matrice métallique de la couche de protection est déposé en alternance ou simultanément par voie électrolytique sous la forme d'une couche sur la base (1) de l'aube de turbine à gaz, et dans lequel le matériau formant la matrice métallique est superficiellement fondu, de telle manière que la matrice de la couche de protection soit solidement assemblée à la base (1) et que le silicium soit noyé dans la matrice au moins en partie sous la forme de SiC, sous forme de fines particules (6) servant de réserve.

2. Procédé suivant la revendication 1, caractérisé en ce qu'au moins quelques composants du matériau formant la matrice métallique de la couche de protection sont déposés par voie électrolytique l'un après l'autre et en alternance ou simultanément avec le dépôt électrophorétique du SiC, en une succession de couches sur la base (1) de l'aube de turbine à gaz.

3. Procédé suivant la revendication 1, caractérisé en ce que la fusion superficielle du matériau formant la matrice est réalisée au moyen d'un faisceau laser (9) ou d'un faisceau d'électrons (10) ou d'un arc électrique (11).

4. Procédé pour déposer une couche de protection contre la corrosion contenant des éléments formant des oxydes protecteurs sur la base (1) d'une aube de turbine à gaz, dans lequel l'élément formant des oxydes protecteurs est déposé sur la base (1) en superalliage de l'aube de turbine à gaz sous la forme de particules (3) en même temps qu'un matériau formant une matrice métallique de la couche de protection, choisi parmi le nickel, le cobalt ou un alliage chrome/nickel sous la forme de particules (2) ou de couches, dans lequel l'élément formant des oxydes protecteurs est le silicium et dans lequel la matrice métallique présente une composition analogue ou à peu près identique à celle de la base (1) de l'aube de turbine à gaz, dans lequel le silicium en forme de particules de SiC est mélangé au matériau formant la matrice métallique se trouvant également sous la forme de particules et le mélange de poudres sans liant ainsi obtenu est déposé sur la base (1) de l'aube de turbine à gaz et est sur celle-ci superficiellement comprimé, compacté et soudé, de telle manière que la matrice de la couche de protection soit solidement assemblée à la base (1) et que le silicium soit noyé dans la matrice au moins en partie sous la forme de SiC, sous forme de fines particules (6) servant de réserve.

5. Procédé suivant la revendication 4, caractérisé en ce que la compression, le compactage et le soudage superficiels du matériau formant la matrice sont réalisés par compactage à chaud à une température de 900 °C et sous une pression pouvant atteindre 500 MPa pendant 0,5 à 10 s.

6. Procédé suivant la revendication 4, caractérisé en ce que la compression, le compactage et le soudage superficiels du matériau formant la matrice sont réalisés par compactage isostatique à chaud d'un mélange de poudres placé dans une enceinte complètement fermée en tôle de fer doux, à une température de 1 200 °C et sous une pression de 100-150 MPa pendant 1/2-3 h, et en ce qu'après le compactage isostatique à chaud l'enceinte en tôle de fer doux est enlevée par voie mécanique ou chimique.

7. Procédé suivant la revendication 4, caractérisé en ce que la base (1) de l'aube de turbine à gaz est soumise à un recuit de grossissement du grain avant son revêtement avec une couche de protection contre la corrosion.

# FIG.1

# FIG.2